# EUROPEAN PATENT SPECIFICATION

(11) **EP 2 740 752 B1**
(45) Date of publication and mention of the grant of the patent: **19.07.2017**
(21) Application number: 12819695.3
(22) Date of filing: 27.07.2012
(51) Int. Cl.: C08G 63/06, C08L 67/04, C08K 13/02, C08K 3/00

(54) **NEW BIODEGRADABLE MASTERBATCH AND PREPARATION METHOD THEREOF**
NEUES BIOLOGISCH ABBAUBARES MASTERBATCH UND HERSTELLUNGSVERFAHREN DAFÜR
NOUVEAU MÉLANGE MAÎTRE BIODÉGRADABLE ET SON PROCÉDÉ DE PRÉPARATION

(30) Priority: 29.07.2011 CN 201110216621
(43) Date of publication of application: 11.06.2014
(73) Proprietor: Shanghai Zaihe Industrial Investment Co., Ltd, Shanghai 201802 (CN)
(72) Inventor: HOU, Lianlong, Wuxi Jiangsu 214101 (CN)
(74) Representative: Wilson, Justin Scott
(86) International application number: PCT/CN2012/079263
(87) International publication number: WO 2013/017044

(56) References cited:
- EP-A1- 2 305 747
- WO-A1-01/23457
- WO-A1-2011/045293
- CN-A- 101 284 934
- CN-A- 101 333 315
- CN-A- 102 358 778
- JP-A- 2007 270 141
- US-A- 5 026 776
- US-A1- 2010 292 352

## Description

### Technical Field

The present invention relates to a master batch and preparation thereof, and in particular to a novel biodegradable master batch and a preparation method and process thereof.

### Background

There are a wide variety of functional master batches, such as filler master batches, flame retardant master batches, antistatic master batches, color master batches. Initially, plastic master batch is only a premix of fillers, carrier resins and a small amount of necessary auxiliaries. With the development of plastic industry, it is hoped to find a filler that is capable of keeping or further improving the performances of plastic products even in case of higher addition amount, thus on one hand, activation and modification are carried out on fillers using coupling agents or surfactants, and on the other hand, modifying agents and a variety of auxiliaries are applied to imparting the plastic products with better properties. Then, plastic master batch is not limited to filler master batches that are used for the purpose of cost reduction, moreover, there exists a variety of functional master batches for special use. The filler master batches and a variety of functional master batches can be added to a plastic matrix conveniently to impart flame retardance, antistatic property and other performances to plastic products, as a result of this, these plastic products meet the demands in different application fields.

Most of the additives in plastic master batches are inorganic, and they are molding compounds, so there is no change of their performances during processing of a polymer material. Hence, those various properties that inherently exist in additives will be brought into the polymer to affect or even alter its property. The size and dispersion uniformity of additive particles place a tremendous impact upon the performances of the finished plastic. In general, finer particles lead to more difficult processing and dispersion, however, this situation is favorable for comprehensive mechanical performances of plastics. The surfaces of the additives, especially inorganic additives, are hydrophilic, whereas resin matrix is lipophilic. Typically, a simple or complex method must be adopted after addition of the additives to carry out transition treatments from hydrophilicity to lipophilicity on the particle surfaces, different kinds of surfactants could be used in these treatments, ranging from universal surfactants to specific surfactants synthesized based on different inorganic surfaces and polymer matrixes, these surface modification treatments that enhance the dispersibility and double-phase (multi-phase) interface bonding force of particles cause increase of the preparation cost of master batches, and for some products that are hardly modified, their effects are unsatisfactory.

In addition, due to the increasingly prominent problems of environmental pollution caused by waste plastics and depletion of nonrenewable resources like petroleum, generation of biodegradable plastic is becoming one of the effective ways in plastic industry to relieve the contradiction in petroleum resource aspect and to control environmental pollution, and has been recognized and accepted by publics. Commercial biodegradable plastic products are usually blended with these materials or other materials to meet the demands in use. Currently, what is needed for all these biodegradable plastics is to continue lowering the cost and spare no effort to improve the product performances, processability and usability, in order to boost their competitiveness relative to ordinary plastics and therefore gain more market shares. Development of the biodegradable master batch, which is indispensable to biodegradable plastic, will definitely be an important and promising tendency.

To sum up, preparation of the master batches is typically featured by addressing the problem of poor interface bonding force between plastic matrix and additives only by surfactants, and use of such master batches could tend to arouse degradation in mechanical performances undesired dispersion and poor modification effect in the finished plastic products. Thus, this field lacks a biodegradable master batch having good dispersion effect and excellent interface bonding property.

Thus, there is an urgent need in this field to develop a biodegradable master batch having good dispersion effect and excellent interface bonding property, and a preparation method thereof.

### Summary of the Invention

A first object of the present invention is to obtain a biodegradable master batch having good dispersion effect and excellent interface bonding property.

A second object of the present invention is to obtain a preparation method of the biodegradable master batch having good dispersion effect and excellent interface bonding property.

In the first aspect of the present invention, provided is a biodegradable master batch, which is prepared by in-situ polymerization of the components in the following formula in weight parts:
10-80 parts of biodegradable monomer;
0.01-5 parts of catalyst;
0.05-5 parts of reaction activator;
0.1-5 parts of thermal stabilizer;
80 parts of flame retardant;
80 parts of filler;
80 parts of antistatic agent;
80 parts of pigment;
80 parts of foaming agent; and
0-5 parts of surface coupling agent.

Specifically, the biodegradable monomer/prepolymer may be one of the monomers, or some of the monomers in combination. The biodegradable monomer/prepolymer may also be a prepolymer formed by these monomers, etc.

Specifically, the catalyst is selected from those that are required in polymerization of these monomers.

In the present invention, the biodegradable monomer is hydroxy acid, diacid, diol, triol, tetrol, ester or combinations thereof used in preparation of biodegradable polymer.

In one embodiment of the present invention, the biodegradable monomer is lactic acid, succinic acid, adipic acid, terephthalic acid, butanediol, glycerol, pentaerythritol, lactide, glycolide, caprolactone or combinations thereof.

In one embodiment of the present invention, the catalyst includes Group I-V metals in the periodic table of elements, metal salt, hydroxide, chloride, oxide or combinations thereof.

Preferably, the catalyst is the metal below: zinc, tin, aluminum, magnesium, antimony, titanium, zirconium or combinations thereof; or the salt, hydroxide, chloride, oxide of the metal.

More preferably, the catalyst is: zinc oxide, zinc lactate, zinc stearate, stannous chloride, stannous octoate, tetrabutyl tin, aluminum oxide, titanium butoxide, butyl titanate, isopropyl titanate, titanium tetraisopropoxide, antimony oxide, ferric oxide, ferric acetylacetonate or combinations thereof.

In one embodiment of the present invention, the reaction activator is epoxy group activator, anhydride group activator, isocyanate group activator, oxazoline group activator or unsaturated double bond-containing reaction activator capable of reacting with carboxyl and hydroxyl.

In one embodiment of the present invention, the epoxy group activator includes: epoxy group-containing acrylate epoxy group activator, glycidyl methacrylate epoxy group activator and epoxidized soybean oil epoxy group activator.

Preferably, the epoxy group activator is an epoxy group activator of the oligomer or prepolymer containing at least 3 epoxy groups/chain segments and having a molecular weight lower than 5000.

A specific activator suitable for the system of the present invention is JoncrylTM series products from BASF Corporation, U.S.A. Other reaction activators may be carbodiimides, anhydrides or isocyanate substances, including: dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol-P200, Stabaxol-100 and Stabaxol-I from Rhein Chemie, Germany, maleic anhydride, glycidyl methacrylate, 1,6-cyclohexyl diisocyanate, 4,4'-methylene bis(cyclohexyl isocyanate), lysine methyl ester diisocyanate, butane diisocyanate, etc.

In one embodiment of the present invention, the thermal stabilizer is phosphate complex antioxidant, hindered phenol complex antioxidant and complex antioxidant of both, including: triaryl phosphite, trialkyl phosphite, trialkyl aryl phosphate ester, alkyl aryl phosphate ester, trithio alkyl ester, bis-phosphite and polymeric phosphite, pentaerythritol ester, and mixtures thereof.

The primary commercial products of the thermal stabilizer are: antioxidant 1010, antioxidant 168, TNPP, Irgafos168, Ultranox626, Cyanox2777, Irganox B, Irganox LC, IrganoxLM, IrganoxHP, IrganoxXP, Ultranox815A, Ultranox 817A, Ultranox 875A, Naugard900, CyanoxXS4, etc.

In one embodiment of the present invention, the flame retardant is additive flame retardant, including zinc borate, zinc fluoroborate, aluminum hydroxide, magnesium hydroxide, magnesium stearate, antimony trioxide, red phosphorus, phosphate ester, ammonium polyphosphate, ammonium polyphosphate, phosphor-nitrogen flame retardant, silicon compound, copper nitrate, silver nitrate, expandable graphite, montmorillonite, layered double hydroxide, melamine, dicyandiamide, guanidine salt and derivatives thereof, tin molybdenum compound, silicon dioxide; and/or
the filler is silicate filler, silica filler, oxide filer and metal powder filler, including: calcium carbonate, calcium sulfate, montmorillonite, talcum powder, starch, chitosan, chitin, glass bead, asbestos, mica, silica, wood powder, shell powder, attapulgite, clay, carbon black, pottery clay, cellulose, or metal powder; and/or
the antistatic agent is cationic quaternary ammonium salt, amine salt, alkyl imidazoline, anionic phosphate, sulfonate, nonionic polyol, polyol ester, fatty acid ester, ethylene oxide adduct of alkyl amine, amphoteric quaternary ammonium salt, alanine salt, carbon black and metal powder; and/or
the pigment is titanium dioxide, carbon black, lithopone, chrome yellow, iron blue, iron oxide yellow, silver powder, brass powder, pigment scarlet, aza yellow, phthalocyanine blue, quinacridone, cinnabar, red clay, realgar, malachite green, calcium carbonate, wollastonite, barite powder, talcum powder, mica powder, or kaolin; and/or
the foaming agent is mainly an additive-type chemical and physical foaming agent: mainly including: azo compounds, N-nitroso compounds, sulfonyl hydrazide compounds, carbamido compounds, carbonates, nitrites, and physical foaming agents, etc.

The surface coupling agent is silane coupling agent, titanate coupling agent, aluminate coupling agent, bimetal coupling agent, phosphate coupling agent, borate coupling agent, chromium complex, zirconium coupling agent, rare earth coupling agent, and mixed coupling agents thereof.

The foaming agent may be specifically selected from: chemical foaming agents, including: amine azodicarboxylate, diisopropyl azodicarboxylate, azodiisobutyronitrile, ammonium azodicarbonate, barium azodicarboxylate, N, N'-dinitroso pentamethylene tetramine, N, N'-dinitroso terephthalamide, sodium nitrite-ammonium chloride mixture, urea, p-toluene sulfonyl hydrazide, phenyl sulfonyl hydrazide, p-diphenyl sulfonyl hydrazide acid, sodium bicarbonate, ammonium bicarbonate, polycarbonate/carbonate mixtures.

The common physical foaming agents are alkane and fluorocarbon compounds with a low boiling point, including n-pentane, n-hexane, n-heptane, petroleum ether, trichlorofluoromethane, dichlorodifluoromethane, dichlorotetrafluoroethane, etc.

The surface coupling agent may be selected from the group consisting of: γ-neno propyl trimethoxyzasilane, vinyl trichlorosilane, vinyl triethoxysilane, vinyl trimethoxysilane, vinyl tris(β-methoxyethoxy)silane, γ-(methacryloyloxy)propyl trimethoxysilane, β-(3,4-epoxy cyclohexyl)ethyl trimethoxysilane, γ-(2,3-epoxy propoxy)propyl trimethoxysilane, titanate coupling agent: isopropyl tri(isostearoyl)titanate, isopropyl tri(dioctyl pyrophosphate)titanate, bis(dioctyl pyrophosphoryl)oxygen-containing titanium acetate, tetraisopropyl bis(dilauryl phosphite)titanate, isopropyl tri(dioctyl pyrophosphoryl)titanate, bis(dioctyl pyrophosphoryl)ethylene titanate, pyrophosphoric acid monoalkoxy titanate, plant acid monoalkoxy titanate, phosphoric acid monoalkoxy titanate, isopropyl di(methacryloyl)isostearoyl titanate, isopropyl tri(dioctyl phosphoryl)titanate, isopropyl tri(dodecylbenzene sulfonyl)titanate, isopropyl tri(n-ethylamino-ethylamino)titanate, etc.

In the second aspect of the present invention, provided is a preparation method of the biodegradable master batch of the present invention, which includes the steps:
(a) Providing the components of the present invention;
(b) Carrying out in-situ polymerization of the components to obtain the master batch.

In one embodiment of the present invention, in the step (b), in-situ polymerization and preparation of the master batch are carried out synchronously in an extrusion device, or

In the step (b), the components are prepolymerized at first and then extruded to obtain the master batch.

Specifically, prepolymerization is carried out in a reaction kettle.

### Detailed Description of the Embodiments

Upon extensive and deep researches of the inventor, a novel biodegradable master batch is prepared based upon improvement of the preparation process in such a manner that: additives are firstly fully mixed with the biodegradable monomer, and then polymerization of the monomer in this mixture is initiated using an in-situ polymerization process. The master batch having good dispersibility and interface property is acquired. And the present invention is implemented on this basis.

The technical concept of the present invention is as follows:
In the present invention, additives are well dispersed in these monomers or prepolymers on the basis of good mobility and reaction activity of the monomers or prepolymers. The monomers and additives are strong in interface interaction and uniform in dispersion, furthermore, a master batch with higher addition amount is prepared. Further, a preparation method of the novel biodegradable master batch is set forth by full utilization of the features of biodegradable monomer polymerization; this method, which is different from traditional physical modification methods for preparation of the master batch, is featured by starting with the biodegradable monomer or prepolymer to prepare a biodegradable master batch having strong interface interaction and uniform dispersion through polymerization, thus a better master batch is provided for further preparation of a biodegradable composite material, besides, the master batch has a higher addition amount.

In the present invention, those terms "contain" or "include" represent that various ingredients could be applied to the mixture or composition of the present invention together. Thus, the terms "consist mainly of..." and "consist of..." are encompassed in those terms "contain" or "include".

The "hydroxy acid" used herein for preparation of biodegradable polymer includes, but is not limited to: lactic acid.

The "diacid" used herein for preparation of biodegradable polymer includes, but is not limited to: succinic acid, adipic acid, terephthalic acid.

The "diol" used herein for preparation of biodegradable polymer includes, but is not limited to: butanediol, hexanediol.

The "triol" used herein for preparation of biodegradable polymer includes, but is not limited to: glycerol.

The "tetrol" used herein for preparation of biodegradable polymer includes, but is not limited to: pentaerythritol.

The "ester" used herein for preparation of biodegradable polymer includes, but is not limited to: lactide, glycolide, caprolactone.

Detailed description is made below to the various aspects of the present invention.

Unless specifically stated, the various raw materials in the present invention could all be commercially available, or prepared according to conventional methods in this art. Unless otherwise defined or stated, all professional and scientific terms used herein are identical to the meanings with which those skilled in this art are familiar. In addition, any methods or materials similar or equivalent to the contents documented could all be applied to the method of the present invention.

### Components

### Summarization

The formula of the prepared biodegradable master batch in the present invention is as follows:

| | |
|---|---|
| Biodegradable monomer | 10∼80 |
| Catalyst | 0.01∼5 |
| Reaction activator | 0.05∼5 |
| Thermal stabilizer | 0.1∼5 |
| Flame retardant | 80 |
| Filler | 80 |
| Antistatic agent | 80 |
| Pigment | 80 |
| Foaming agent | 80 |
| Surface coupling agent | 0∼5 |

This formula encompasses combinations of a plurality of functional master batches; flame retardant master batches, antistatic master batches and color master batches for biodegradation may be prepared according to actual needs, or, multifunctional mixed master batches may also be prepared, e.g. flame retardant and antistatic master batch for biodegradation, etc.

In the present invention, on the basis of the features of the monomers or prepolymers, such as good mobility, reaction activity and in-situ modification, additives are well dispersed in these monomers or prepolymers to prepare master batches with different functions. The monomers and additives are strong in interface interaction and uniform in dispersion, furthermore, a master batch with higher addition amount can be prepared; further, a preparation method of the novel biodegradable master batch is set forth by full utilization of the features of biodegradable monomer polymerization and in-situ chemical modification; this method, which is different from traditional methods for preparation of the master batch by direct blending of high-viscosity polymers and additives, is featured by starting with the biodegradable monomer or prepolymer, achieving better dispersion of the additives through in-situ polymerization at the presence of the reaction activator, and finally preparing a biodegradable active master batch having strong interface interaction and uniform dispersion; the master batch having active end groups is capable of further improving the compatibility between matrix and additives in a finished composite material so as to further prepare a biodegradable composite material that has better performances than common master batches.

In conclusion, this technology overcomes the following defects in conventional master batch preparation methods: 1) the high-viscosity polymer carrier is hardly mixed with the additives, and the processing is difficult; 2) there is a poor compatibility between matrix and additives; and 3) to improve the compatibility, the master batch requires addition of the activator.

### Biodegradable monomer and prepolymer thereof

The biodegradable monomer in the present invention is a monomer used in preparation of biodegradable polymer, including: monomers like hydroxy acid, diacid, diol, triol, tetrol, ester, etc.; specifically: lactic acid, succinic acid, adipic acid, terephthalic acid, butanediol, glycerol, pentaerythritol, lactide, glycolide, caprolactone, etc.; the biodegradable monomer may be one of the monomers, or some of the monomers in combination. The biodegradable monomer may be a prepolymer formed by these monomers. The content of the biodegradable monomer is 10-80% (or in weight parts), and the content of the biodegradable monomer in preparation of a high-concentration master batch is 10-80%.

Specifically, the biodegradable monomer is one of the monomers, or some of the monomers in combination. The biodegradable monomer may also be a prepolymer formed by these monomers, etc.

In one embodiment of the present invention, the biodegradable monomer is hydroxy acid, diacid, diol, triol, tetrol, ester or combinations thereof used in preparation of biodegradable polymer; the prepolymer is a prepolymer derived from the hydroxy acid, diacid, diol, triol, tetrol, ester or combinations thereof and having a degree of polymerization of 50-5000.

In one embodiment of the present invention, the biodegradable monomer is lactic acid, succinic acid, adipic acid, terephthalic acid, butanediol, glycerol, pentaerythritol, lactide, glycolide, caprolactone or combinations thereof.

### Catalyst

Specifically, the catalyst is selected from those that are required in polymerization of these monomers. The catalysts that can be used in the present invention mainly are Group I-V metals in the periodic table of elements, metal salt, hydroxide, chloride and oxide, etc. The preferred metal elements are: zinc, tin, aluminum, magnesium, antimony, titanium, zirconium, etc. The alternative specific catalysts are: zinc oxide, zinc lactate, zinc stearate, stannous chloride, stannous octoate, tetrabutyl tin, aluminum oxide, titanium butoxide, butyl titanate, isopropyl titanate, titanium tetraisopropoxide, antimony oxide, ferric oxide, ferric acetylacetonate, etc.

In one embodiment of the present invention, the catalyst includes Group I-V metals in the periodic table of elements, metal salt, hydroxide, chloride, oxide or combinations thereof.

Preferably, the catalyst is the metal below: zinc, tin, aluminum, magnesium, antimony, titanium, zirconium or combinations thereof; or the salt, hydroxide, chloride, oxide of the metal.

More preferably, the catalyst is: zinc oxide, zinc lactate, zinc stearate, stannous chloride, stannous octoate, tetrabutyl tin, aluminum oxide, titanium butoxide, butyl titanate, isopropyl titanate, titanium tetraisopropoxide, antimony oxide, ferric oxide, ferric acetylacetonate or combinations thereof.

### Reaction activator

The reaction activators used in the present invention are substances that are capable of reacting with carboxyl and hydroxyl, in order to improve the compatibility between filler and monomer or prepolymer and further optimize dispersion. They may be epoxy group activators, anhydride group activators, isocyanate group activators, oxazoline group activators or unsaturated double bond-containing activators, etc. The epoxy group activators include: epoxy group-containing acrylate activators, glycidyl methacrylate activators and epoxidized soybean oil epoxy group activators, etc. Preferably, the epoxy group activator is an epoxy group activator of the oligomer or prepolymer containing at least 3 epoxy groups/chain segments and having a molecular weight lower than 5000. A specific activator suitable for the system of the present invention is JoncrylTM series products from BASF Corporation, U.S.A. Other reaction activators may be carbodiimides, anhydrides or isocyanate substances, including: dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol-P200, Stabaxol-100 and Stabaxol-I maleic from Rhein Chemie, Germany, anhydrides, glycidyl methacrylate, hexamethylene-1,6-diisocyanate,1,6-cyclohexyl diisocyanate, 4,4'-methylene bis(cyclohexyl isocyanate), lysine methyl ester diisocyanate and butane diisocyanate, etc.

In one embodiment of the present invention, the reaction activator is epoxy group activator, anhydride group activator, isocyanate group activator, oxazoline group activator or unsaturated double bond-containing reaction activator capable of reacting with carboxyl and hydroxyl.

In one embodiment of the present invention, the epoxy group activator includes: epoxy group-containing acrylate epoxy group activator, glycidyl methacrylate epoxy group activator and epoxidized soybean oil epoxy group activator.

Preferably, the epoxy group activator is an epoxy group activator of the oligomer or prepolymer containing at least 3 epoxy groups/chain segments and having a molecular weight lower than 5000.

A specific activator suitable for the system of the present invention is JoncrylTM series products from BASF Corporation, U.S.A. Other reaction activators may be carbodiimides, anhydrides or isocyanate substances, including: dicyclohexyl carbodiimide, diisopropyl carbodiimide, bis(2,6-diisopropylphenyl)carbodiimide, 1-ethyl-(3-dimethylaminopropyl)-carbodiimide hydrochloride, Stabaxol-P, Stabaxol-P200, Stabaxol-100 and Stabaxol-I from Rhein Chemie, Germany, maleic anhydride, glycidyl methacrylate, 1,6-cyclohexyl diisocyanate, 4,4'-methylene bis(cyclohexyl isocyanate), lysine methyl ester diisocyanate, butane diisocyanate, etc.

### Thermal stabilizer

The thermal stabilizer used in the present invention aims at ensuring that the biodegradable master batch keeps stable and avoids degradation during melt mixing or reprocessing, and this is mainly for reduction of thermal degradation and hydrolysis. The amount of the thermal stabilizer used is adjusted according to specific preparation routes and process conditions like processing temperature, and the typical amount is 0.1-5%.

In one embodiment of the present invention, the thermal stabilizer is phosphate complex antioxidant, hindered phenol complex antioxidant and complex antioxidant of both, including: triaryl phosphite, trialkyl phosphite, trialkyl aryl phosphate ester, alkyl aryl phosphate ester, trithio alkyl ester, bis-phosphite and polymeric phosphite, pentaerythritol ester, and mixtures thereof.

The primary commercial products of the thermal stabilizer are: antioxidant 1010; antioxidant 168, TNPP, Irgafos168, Ultranox626, Cyanox2777, Irganox B, Irganox LC, IrganoxLM, IrganoxHP, IrganoxXP, Ultranox815A, Ultranox 817A, Ultranox 875A, Naugard900, CyanoxXS4, etc.

### Additives like flame retardant, filler, antistatic agent, pigment and foaming agent

Additives like flame retardant, filler, antistatic agent, pigment and foaming agent are main parts for realizing functionalization of the master batch, and they are fully dispersed in the biodegradable monomer or prepolymer and contained in the resin matrix when a polymer long chain is formed by monomer reaction. These additives mainly are inorganic powders that have strong interface interaction and good infiltration effect with the biodegradable monomer or prepolymer, the particle size of these powders is preferably not more than tens of microns, and smaller particle size brings better effect of the prepared master batch.

In one embodiment of the present invention, the flame retardant is additive flame retardant, including zinc borate, zinc fluoroborate, aluminum hydroxide, magnesium hydroxide, magnesium stearate, antimony trioxide, red phosphorus, phosphate ester, ammonium polyphosphate, ammonium polyphosphate, phosphor-nitrogen flame retardant, silicon compound, copper nitrate, silver nitrate, expandable graphite, montmorillonite, layered double hydroxide, melamine, dicyandiamide, guanidine salt and derivatives thereof, tin molybdenum compound, silicon dioxide;
the filler is silicate filler, silica filler, oxide filer and metal powder filler, including: calcium carbonate, calcium sulfate, montmorillonite, talcum powder, starch, chitosan, chitin, glass bead, asbestos, mica, silica, wood powder, shell powder, attapulgite, clay, carbon black, pottery clay, cellulose, or metal powder;
the antistatic agent is cationic quaternary ammonium salt, amine salt, alkyl imidazoline, anionic phosphate, sulfonate, nonionic polyol, polyol ester, fatty acid ester, ethylene oxide adduct of alkyl amine, amphoteric quaternary ammonium salt, alanine salt, carbon black and metal powder;
the pigment is titanium dioxide, carbon black, lithopone, chrome yellow, iron blue, iron oxide yellow, silver powder, brass powder, pigment scarlet, aza yellow, phthalocyanine blue, quinacridone, cinnabar, red clay, realgar, malachite green, calcium carbonate, wollastonite, barite powder, talcum powder, mica powder, or kaolin;
the foaming agent is mainly an additive-type chemical and physical foaming agent: mainly including: azo compounds, N-nitroso compounds, sulfonyl hydrazide compounds, carbamido compounds, carbonates, nitrites, and physical foaming agents, etc.

The foaming agent may be specifically selected from: chemical foaming agents, including: amine azodicarboxylate, diisopropyl azodicarboxylate, azodiisobutyronitrile, ammonium azodicarbonate, barium azodicarboxylate, N, N'-dinitroso pentamethylene tetramine, N, N'-dinitroso terephthalamide, sodium nitrite-ammonium chloride mixture, urea, p-toluene sulfonyl hydrazide, phenyl sulfonyl hydrazide, p-diphenyl sulfonyl hydrazide acid, sodium bicarbonate, ammonium bicarbonate, polycarbonate/carbonate mixtures.

The common physical foaming agents are alkane and fluorocarbon compounds with a low boiling point, including n-pentane, n-hexane, n-heptane, petroleum ether, trichlorofluoromethane, dichlorodifluoromethane, dichlorotetrafluoroethane, etc.

The surface coupling agent is silane coupling agent, titanate coupling agent, aluminate coupling agent, bimetal coupling agent, phosphate coupling agent, borate coupling agent, chromium complex, zirconium coupling agent, rare earth coupling agent, and mixed coupling agents thereof.

The surface coupling agent used in the present invention mainly includes silane surface coupling agents, aluminate coupling agents and titanate coupling agents. Owing to addition of the additives to the monomer or prepolymer having a low molecular weight, use of a small amount of the surface coupling agent could result in excellent effect based upon the feature that the additives generate the master batch during in-situ polymerization of the biodegradable monomer, and in some cases, the surface coupling agent may not be used. This is incomparable for traditional methods.

The surface coupling agent may be selected from the group consisting of: γ-neno propyl trimethoxyzasilane, vinyl trichlorosilane, vinyl triethoxysilane, vinyl trimethoxysilane, vinyl tris(β-methoxyethoxy)silane, γ-(methacryloyloxy)propyl trimethoxysilane, β-(3,4-epoxy cyclohexyl)ethyl trimethoxysilane, γ-(2,3-epoxy propoxy)propyl trimethoxysilane, titanate coupling agent: isopropyl tri(isostearoyl)titanate, isopropyl tri(dioctyl pyrophosphate)titanate, bis(dioctyl pyrophosphoryl)oxygen-containing titanium acetate, tetraisopropyl bis(dilauryl phosphite)titanate, isopropyl tri(dioctyl pyrophosphoryl)titanate, bis(dioctyl pyrophosphoryl)ethylene titanate, pyrophosphoric acid monoalkoxy titanate, plant acid monoalkoxy titanate, phosphoric acid monoalkoxy titanate, isopropyl di(methacryloyl)isostearoyl titanate, isopropyl tri(dioctyl phosphoryl)titanate, isopropyl tri(dodecylbenzene sulfonyl)titanate, isopropyl tri(n-ethylamino-ethylamino)titanate, etc.

### Preparation method

According to the present invention, the biodegradable master batch is prepared by a novel preparation method, and has stronger interface interaction and larger specific surface area with the additives by means of excellent mobility of the biodegradable monomer or prepolymer. The performances are improved instead of being degraded because there is a strong phase interface interaction between additives and matrix and the biodegradable monomer or prepolymer is not affected. This ensures that the biodegradable master batch prepared in the present invention is not only imparted with our desired functions and larger addition amount, but also avoids degradation in own physical performances. In this biodegradable master batch, the additives are filler, flame retardant, pigment and foaming agent, etc., the addition mass fraction of each additive is 80%, and the temperature for blending extrusion is 50-220°C.

Specifically, the biodegradable master batch prepared in the present invention may be prepared according to two process routes.

The first process route lies in preparation of the biodegradable master batch by a reactive extrusion method. In this route, biodegradable monomer, auxiliaries, and additives are firstly dry-mixed or melt-mixed, and then, polymerization of the biodegradable monomer and formation of the biodegradable master batch are carried out simultaneously in an extrusion device. Such a method is capable of continuous production, has short period and relatively rigorous processing conditions, and contributes to implementation of industrial production.

The second process route lies in intermittent preparation of the biodegradable master batch by a two-step method. In this method, the prepolymer having a particular molecular weight is prepared by polymerization in a reaction kettle at first, and then, the additives are added in a side feeding way to prepare the biodegradable master batch by extrusion, or the biodegradable prepolymer and the additives are mixed at first and then the biodegradable master batch is prepared. Such a process route has lower production efficiency and longer period than the first process route, but it requires no special reactive extrusion device, and is not rigorous in processing requirements and relatively moderate in process conditions, so this process route is easy to implement.

The biodegradable master batch of the present invention is applicable to manufacturing of films, sheets, injection molding, profiles and containers, etc.

In one embodiment of the present invention, a preparation method of the biodegradable master batch of the present invention includes the steps:
(a) Providing the components of the present invention;
(b) Carrying out in-situ polymerization of the components to obtain the master batch.

In one embodiment of the present invention, in the step (b), in-situ polymerization and preparation of the master batch are carried out synchronously in an extrusion device, or

In the step (b), the components are prepolymerized at first and then extruded to obtain the master batch.

Specifically, prepolymerization is carried out in a reaction kettle.

### Advantages

The present invention relates to a preparation method of a novel biodegradable master batch and relevant processes. The present invention has the characteristic that, a variety of functional additives or the mixtures thereof are added at the stage of biodegradable monomer or prepolymer to accomplish full mixing, and the low-viscosity monomer or prepolymer guarantees addition of more additives. Afterwards, polymerization of the biodegradable monomer or prepolymer is initiated to guarantee that the polymerization-resulting polymer matrix and the additives in the prepared biodegradable master batch have better dispersion and excellent interface property. The reaction activator is added to react with the carrier, so as to generate active end groups; the reaction activator is capable of chemical/physical reaction with the additives to improve the compatibility between the carrier and the matrix of the finished composite material, dispersion of the additives is more uniform, and more additives are added. Thus, addition of the master batch to the prepared composite material could bring about more addition of the additives, improvement of the compatibility and better performances.

Preparation of this master batch can be carried out in existing equipment such as reaction kettle or extruder. In preparation of the master batch, the problem of poor interface bonding force between plastic matrix and additives is typically solved by use of the surfactant, and use of this master batch tends to cause degradation of the mechanical performances, unsatisfactory dispersion and poor modification effect in a finished plastic product. The biodegradable-dedicated master batch of the present invention, which is prepared by an in-situ polymerization process, is capable of solving this problem well, in addition, this master batch is not only good in dispersion and easy for processing, but also has large addition amount and better performances.

Other aspects of the present invention will become readily apparent to those skilled in this art owing to the disclosure herein.

The present invention will be further illustrated below in conjunction with specific examples. It shall be understood that, these examples are for illustrative purposes only, rather than limitations to the scope of the present invention. In the examples below, measurements in the experimental methods with specific conditions unspecified are typically performed in accordance with national standards. In case of absence of the respective national standards, measurements are performed in accordance with general international standards and general conditions or with conditions suggested by manufacturers. Unless otherwise stated, all the parts are by weight and all the percents are by weight.

Unless otherwise defined or stated, all professional and scientific terms used herein are identical to the meanings with which those skilled in this art are familiar.

Reference could be made to the examples below in detailed description of the present invention. These examples are for a better understanding of the inventive contents only, rather than limitations to the technical scope covered by the present invention.

### [Example 1] Preparation of a biodegradable master batch with high content of calcium sulfate

The first process route of the present invention is adopted: under the protection of dry nitrogen, 8kg of lactide are added to a high-speed mixer at first and then stirred, 1 minute later, 100g of stannous octoate, 200g of ADR4368C and 150g of each of TNPP/Irgafos 168 are orderly added to the high-speed mixer and mixed for 3 minutes, and finally, 11.88kg of calcium sulfate are added and mixed for 3 minutes; different mixing speeds are adjusted to achieve full and uniform mixing. The properly-mixed materials are measured by a feed hopper and added to an extruder for melt extrusion and hot-cutting granulation to obtain the biodegradable master batch with 60% of calcium sulfate. Polymerization of the master batch and the monomer is carried out in one step, in this way, the cost is saved, and furthermore, direct preparation of the master batch from the lactide monomer results in better mobility and easier processing. The typical extruder temperature is 80-220°C, and the rotating speed of the screw is 20-50rpm.

### [Example 2] Preparation of a biodegradable master batch with high content of carbon black

The first process route of the present invention is adopted: under the protection of dry nitrogen, free water is removed from 88% lactic acid in a reaction kettle to obtain 9.0kg of pure L-lactic acid at first, then 120g of pentaerythritol, 150g of stannous octoate and 400g of antioxidant 1010/168 are orderly added to the reaction kettle for fully mixing, afterwards, 11.0kg of carbon black are added to the reaction kettle via a special pipeline, the temperature is raised up to 190°C, and reaction is continuously maintained for 10 hours under a certain degree of vacuum. The materials that undergo the whole reaction are subjected to melt extrusion and hot-cutting granulation in an extruder connected with the reaction kettle, to obtain the antistatic biodegradable master batch with 55% of carbon black. The typical extruder temperature is 80-220°C, and the rotating speed of the screw is 50-100rpm.

### [Example 3] Preparation of a biodegradable master batch with high content of nano calcium carbonate

The second process route of the present invention is adopted: at first, a biodegradable PBSA prepolymer is prepared by direct condensation polymerization. The specific procedure is as follows: 8.2kg of 1,4-butanediol (99%), 8.9kg of succinic acid and 2.2kg of adipic acid are added to a 50L reactor with heating and stirring reactors, and mixed, and then, 97.0g of tetrabutyl titanate (99%) are added as reaction catalyst. The mixing reaction temperature is set as 120°C, the temperature rises to 180°C at a rate of 30°C/hour and is kept for 5 hours at every temperature point, and stirring is maintained at the same time. During temperature rise, a vacuum system is switched on to reduce the degree of vacuum to 50mbar at a rate of 100mbar/hour. Then, the temperature rises to 220°C and is kept for 5 hours. After that; vacuum release is carried out, and the finished prepolymer is extruded by an extruder, cooled and granulated. The typical extrusion temperature is: 80-150°C, the rotating speed of the screw is 120rpm. The active prepolymer product is pale yellow and has a reduced viscosity of 0.82dl/g, a molecular weight of 51,000 Daltons and a melting point of 96°C.

Then, 13.50kg of nano calcium carbonate are put in a high-speed mixer with the mixing speed being set at 300rpm, and 203g of plant acid monoalkoxy titanate coupling agent are slowly dripped into this calcium carbonate. The mixing speed is increased to 1200rpm after dripping, those substances are mixed for 3 minutes, the mixture is transferred to a drying unit for drying reaction for half an hour at 120°C, and the resulting product is preserved for future use. At first, 6kg of the prepared PBSA prepolymer are added to the high-speed mixer and stirred at a low speed, then 60g of stannous octoate, 240g of hexamethylene-1,6-diisocyanate (HMDI) and 150g of each of TNPP/Irgafos 168 are orderly added to the high-speed mixer for mixing for 3 minutes, and finally, all the calcium carbonate that is properly processed is added and mixed for 3 minutes, and different mixing speeds are adjusted to achieve full and uniform mixing. The properly-mixed materials are measured by a feed hopper and added to an extruder for melt extrusion and hot-cutting granulation to obtain the biodegradable master batch with 67.5% of nano calcium carbonate. The typical extruder temperature is 60-180°C, and the rotating speed of the screw is 20-50rpm.

### [Example 4] Preparation of a mixed biodegradable master batch with high content of magnesium hydroxide and titanium dioxide

The second process route of the present invention is adopted: at first, a biodegradable PBS prepolymer is prepared by direct condensation polymerization. The specific procedure is as follows: 8.2kg of 1,4-butanediol (99%) and 11.8kg of succinic acid are added to a 50L reactor with heating and stirring reactors, stirred and mixed, and then, 106.0g of tetrabutyl titanate (99%) are added as reaction catalyst. The mixing reaction temperature is set as 120°C, the temperature rises to 180°C at a rate of 30°C/hour and is kept for 5 hours at every temperature point, and stirring is maintained at the same time. During temperature rise, a vacuum system is switched on to reduce the degree of vacuum to 10mbar at a rate of 100mbar/hour. Then, the temperature rises to 220°C and is kept for 5 hours. After that, vacuum release is carried out, the temperature of the reaction kettle is reduced to 150°C, 300g of tin stearate, 800g of hexamethylene-1,6-diisocyanate (HMDI) and 500g of each of TNPP/Irgafos 168 are orderly and slowly added and then fully mixed, and the resulting mixture is preserved for future use.

Simultaneously, 8.0kg of magnesium hydroxide and 5.0kg of titanium dioxide are weighed and put in a high-speed mixer, and different mixing speeds are set to mix those substances for 5 minutes. The properly-mixed materials are added in a side feeding way to an extruder connected with the reaction kettle, and then subjected to melt coextrusion and hot-cutting granulation together with the properly-processed PBS prepolymer, so as to obtain the high-filling flame-retardant mixed biodegradable master batch. The PBS prepolymer product that is prepared using this process is pale yellow and has a reduced viscosity of 1.04dl/g, a molecular weight of 63,000 Daltons and a melting point of 115°C. The typical extruder temperature is 80-200°C, and the rotating speed of the screw is 20-50rpm.

Described above are the preferred examples of the present invention only, which are not intended to limit the scope of the substantial technical content of the present invention. The substantial technical content of the present invention is broadly defined in the scope of claims of this application, and any technical entities or methods achieved by others shall all be contemplated as being covered by the scope of claims in case that they are completely identical to those defined by the scope of claims of this application.

## Claims

1. A method for preparing a biodegradable master batch, wherein the method includes the steps:
(a) providing the below components;
(b) carrying out in-situ polymerization of the components and preparation of the biodegradable master batch synchronously in an extrusion device;
wherein the biodegradable master batch is prepared from the components in the following formula in weight parts:
10-80 parts of biodegradable monomer;
0.01-5 parts of catalyst;
0.05-5 parts of reaction activator;
0.1-5 parts of thermal stabilizer;
80 parts of flame retardant;
80 parts of filler;
80 parts of antistatic agent;
80 parts of pigment;
80 parts of foaming agent;
0-5 parts of surface coupling agent,
wherein the biodegradable monomer is hydroxy acid, diacid, diol, triol, tetrol, ester or combinations thereof used in preparation of biodegradable polymer.

2. The methods for preparing the biodegradable master batch according to claim 1, wherein the biodegradable monomer is lactic acid, succinic acid, adipic acid, terephthalic acid, butanediol , glycerol, pentaerythritol, lactide, glycolide, caprolactone or combinations thereof.

3. The method for preparing the biodegradable master batch according to claim 1, wherein the catalyst includes Group I-V metals in the periodic table of elements, metal salt, hydroxide, chloride, oxide or combinations thereof.

4. The method for preparing the biodegradable master batch according to claim 1, wherein the catalyst is the metal below: zinc, tin, aluminum, magnesium, antimony, titanium, zirconium or combinations thereof; or the salt, hydroxide, chloride, oxide of the metal.

5. The method for preparing the biodegradable master batch according to claim 1, wherein the catalyst is:
zinc oxide, zinc lactate, zinc stearate, stannous chloride, stannous octoate, tetrabutyl tin, aluminum oxide,
titanium butoxide, butyl titanate, isopropyl titanate, titanium tetraisopropoxide, antimony oxide, ferric oxide, ferric acetylacetonate or combinations thereof.

6. The method for preparing the biodegradable master batch according to claim 1, wherein the reaction activator is epoxy group activator, anhydride group activator, isocyanate group activator, oxazoline group activator or unsaturated double bond-containing reaction activator capable of reacting with carboxyl and hydroxyl.

7. The method for preparing the biodegradable master batch according to claim 6, wherein the epoxy group activator includes: epoxy group-containing acrylate epoxy group activator, glycidyl methacrylate epoxy group activator and epoxidized soybean oil epoxy group activator.

8. The method for preparing the biodegradable master batch according to claim 6, wherein the epoxy group activator is an epoxy group activator of the oligomer or prepolymer containing at least 3 epoxy groups and having a molecular weight lower than 5000.

9. The method for preparing the biodegradable master batch according to claim 1, wherein the thermal stabilizer is phosphate complex antioxidant, hindered phenol complex antioxidant and complex antioxidant of both, including: triaryl phosphite, trialkyl phosphite, trialkyl aryl phosphate ester, alkyl aryl phosphate ester, trithio alkyl ester, bis-phosphite and polymeric phosphite, pentaerythritol ester, and mixtures thereof.

10. The method for preparing the biodegradable master batch according to claim 1, wherein the flame retardant is additive flame retardant, including zinc borate, zinc fluoroborate, aluminum hydroxide, magnesium hydroxide, magnesium stearate, antimony trioxide, red phosphorus, phosphate ester, ammonium polyphosphate, ammonium polyphosphate, phosphor-nitrogen flame retardant, silicon compound, copper nitrate, silver nitrate, expandable graphite, montmorillonite, layered double hydroxide, melamine, dicyandiamide, guanidine salt and derivatives thereof, tin molybdenum compound, silicon dioxide; and/or
the filler is silicate filler, silica filler, oxide filer and metal powder filler, including: calcium carbonate, calcium sulfate, montmorillonite, talcum powder, starch, chitosan, chitin, glass bead, asbestos, mica, silica, wood powder, shell powder, attapulgite, clay, carbon black, pottery clay, cellulose, or metal powder; and/or
the antistatic agent is cationic quaternary ammonium salt, amine salt, alkyl imidazoline, anionic phosphate, sulfonate, nonionic polyol, polyol ester, fatty acid ester, ethylene oxide adduct of alkyl amine, amphoteric quaternary ammonium salt, alanine salt, carbon black and metal powder; and/or
the pigment is titanium dioxide, carbon black, lithopone, chrome yellow, iron blue, iron oxide yellow, silver powder, brass powder, pigment scarlet, aza yellow, phthalocyanine blue, quinacridone, cinnabar, red clay, realgar, malachite green, calcium carbonate, wollastonite, barite powder, talcum powder, mica powder, or kaolin; and/or
the foaming agent is azo compound, N-nitroso compound, sulfonyl hydrazide compound, carbamido compound, carbonate, nitrite, or physical foaming agent,
the surface coupling agent is silane coupling agent, titanate coupling agent, aluminate coupling agent, bimetal coupling agent, phosphate coupling agent, borate coupling agent, chromium complex, zirconium coupling agent, rare earth coupling agent, and mixed coupling agents thereof.

11. A biodegradable master batch prepared by the method of claim 1.

## Patentansprüche

1. Verfahren zur Herstellung eines biologisch abbaubaren Stammgemisches, wobei das Verfahren die Schritte umfasst:
(a) Bereitstellen der folgende Bestandteile,
(b) Ausführen einer in-situ-Polymerisation der Bestandteile und dabei gleichzeitige Herstellung des biologisch abbaubaren Stammgemisches in einem Extruder,
wobei das biologisch abbaubare Stammgemisch aus dem Bestandteilen der folgenden Rezeptur in Gewichtsteilen hergestellt wird:
10 - 80 Teile biologisch abbaubares Monomer,
0,01 - 5 Teile Katalysator,
0,05 - 5 Teile Reaktionsaktivator,
0,1 - 5 Teile Wärmestabilisator,
80 Teile Flammschutzmittel,
80 Teile Füllstoff,
80 Teile Antistatikum,
80 Teile Pigment,
80 Teile Schäummittel,
0 - 5 Teile Haftvermittler,
wobei das biologisch abbaubarer Monomer eine Hydroxysäure, eine Disäure, ein Diol, ein Triol, ein Tetrol, ein Ester oder Kombinationen aus diesen ist, die bei der Herstellung von biologisch abbaubaren Polymer verwendet werden.

2. Verfahren zur Herstellung des biologisch abbaubaren Stammgemisches nach Anspruch 1, wobei das biologisch abbaubare Monomer Milchsäure, Bernsteinsäure, Adipinsäure, Terephthalsäure, Butandiol, Glycerin, Pentaerythrit, Lactid, Glykolid, Caprolacton oder Kombinationen aus diesen ist.

3. Verfahren zur Herstellung des biologisch abbaubaren Stammgemisches nach Anspruch 1, wobei der Katalysator Metalle der Gruppen I - V im periodischen System der Elemente, deren Salze, Hydroxide, Chloride, Oxide oder Kombinationen aus diesen umfasst.

4. Verfahren zur Herstellung des biologisch abbaubaren Stammgemisches nach Anspruch 1, wobei der Katalysator eines der folgenden Metalle ist: Zink, Zinn, Aluminium, Magnesium, Antimon, Titan, Zirkonium oder Kombinationen aus diesen, oder das Salz, Hydroxid, Chlorid, Oxid des Metalls.

5. Verfahren zur Herstellung des biologisch abbaubaren Stammgemisches nach Anspruch 1, wobei der Katalysator Zinkoxid, Zinklactat, Zinkstearat, Zinn-(II)-Chlorid, Zinn-(II)-octoat, Tetrabutylzinn, Aluminiumoxid, Titanbutoxid, Butyltitanat, Isopropyltitanat, Titantetraisopropoxid, Antimonoxid, Eisen-(III)-Oxid, Eisen-(III)-acetylacetonat oder Kombinationen aus diesen ist.

6. Verfahren zur Herstellung des biologisch abbaubaren Stammgemisches nach Anspruch 1, wobei der Reaktionsaktivator ein Epoxidgruppenaktivator, ein Anhydridgruppenaktivator, ein Isocyanatgruppenaktivator, ein Oxazolingruppenaktivator oder ein Reaktionsaktivator ist, der ungesättigte Doppelbindungen enthält und mit Carboxyl und Hydroxyl reagieren kann.

7. Verfahren zur Herstellung des biologisch abbaubaren Stammgemisches nach Anspruch 6, wobei der Epoxygruppenaktivator einen Epoxygruppenaktivator mit Epoxygruppen enthaltendem Acrylat, einen Glycidylmethacrylat- Epoxygruppenaktivator und einen Sojaölepoxidat- Epoxygruppenaktivator umfasst.

8. Verfahren zur Herstellung des biologisch abbaubaren Stammgemisches nach Anspruch 6, wobei der Epoxygruppenaktivator ein Epoxygruppenaktivator des Oligomers oder Präpolymers mit mindestens 3 Epoxygruppen und einem Molekulargewicht kleiner als 5000 ist.

9. Verfahren zur Herstellung des biologisch abbaubaren Stammgemisches nach Anspruch 1, wobei der Wärmestabilisator ein Phosphatkomplex-Antioxydans, ein Antioxydans mit gehindertem Phenolkomplex und ein komplexes Antioxydans aus beiden ist, einschließlich Triarylphosphit, Trialkylphosphit, Trialkylarylphosphatester, Alkylarylphosphatester,Trithioalkylester, Bisphosphit und polymeres Phosphit, Pentaerythritester und Mischungen aus diesen.

10. Verfahren zur Herstellung des biologisch abbaubaren Stammgemisches nach Anspruch 1, wobei
- das Flammschutzmittel ein additives Flammschutzmittel ist, einschließlich Zinkborat, Zinkfluorborat, Aluminumhydroxid, Magnesiumhydroxid, Magnesiumstearat, Antimontrioxid, roter Phosphor, Phosphatester, Ammoniumpolyphosphat, Ammoniumpolyphosphat, Phosphor-Stickstoff-Flammschutzmittel, eine Siliziumverbindung, Kupfernitrat, Silbernitrat, blähfähiger Graphit, Montmorillonit, geschichtetes Doppelhydroxid, Melamin, Dicyandiamid, ein Guanidinsalz und Derivate von diesen, eine Zinn-Molybdän-Verbindung, Siliziumdioxid, und/oder
- der Füllstoff ein Silikatfüllstoff, ein Siliziumdioxidfüllstoff, ein Oxidfüllstoff und ein Metallpulverfüllstoff ist, einschließlich Kalziumkarbonat, Kalziumsulfat, Montmorillonit, Talkumpuder, Stärke, Chitosan, Chitin, Glasperlen, Asbest, Glimmer, Siliziumdioxid, Holzpulver, Schalenpulver, Attapulgit, Ton, Ruß, Töpferton, Zellulose oder Metallpulver, und/oder
- das Antistatikum ein kationisches quaternäres Ammoniumsalz, ein Aminsalz, ein Alkylimidazolin, ein anionisches Phosphat, Sulfonat, nichtionisches Polyol, Polyolester, Fettsäureester, Ethylenoxidaddukt eines Alkylamins, ein amphoteres quaternäres Ammoniumsalz, ein Alaninsalz, Ruß und Metallpulver ist, und/oder
- das Pigment Titandioxid, Ruß, Lithopone, Chromgelb, Eisenblau, Eisenoxidgelb, Silberpulver, Messingpulver, Pigmentscharlach, Azagelb, Phthalocyaninblau, Chinacridon, Zinnober, roter Ton, Realgar, Malachitgrün, Kalziumkarbonat, Wollastonit, Barytpulver, Talkumpuder, Glimmerpulver oder Kaolin ist, und/oder
- das Schäummittel eine Azoverbindung, eine N-Nitrosoverbindung, eine Sulfonylhydrazylverbindung, eine Carbamidverbindung, ein Karbonat, ein Nitrit oder ein physikalisches Schäummittel ist,
- der Haftvermittler ein Silan-Haftvermittler, ein Titanat-Haftvermittler, ein Aluminat-Haftvermittler, ein Bimetall-Haftvermittler, ein Phosphat-Haftvermittler, ein Borat-Haftvermittler, ein Chromkomplex, ein Zirkonium-Haftvermittler, ein Seltenerd-Haftvermittler und ein aus diesen gemischter Haftvermittler ist.

11. Biologisch abbaubares Stammgemisch, hergestellt durch das Verfahren nach Anspruch 1.

## Revendications

1. Procédé de préparation d'un mélange maître biodégradable, comprenant des étapes consistant à :
(a) se procurer les composés ci-dessous,
(b) effectuer une polymérisation in situ de ces composés et la préparation en synchronisme du mélange maître biodégradable dans un dispositif d'extrusion,
le mélange maître biodégradable étant préparé à partir des composants ci-dessous avec les proportions pondérales ci-dessous :
10-80 parties d'un monomère biodégradable,
0,01-5 parties d'un catalyseur,
0,05-5 parties d'un activateur de réaction,
0,1-5 parties d'un agent de stabilisation thermique,
80 parties d'un retardataire de flamme,
80 parties d'une charge,
80 parties d'un agent antistatique,
80 parties d'un pigment,
80 parties d'un agent moussant,
0,5 parties d'un agent de couplage de surface,
le monomère biodégradable étant un hydroxy acide, un diacide, un diol, un triol, un tetrol, un ester ou une combinaison de ces composants utilisés lors de la préparation du polymère biodégradable.

2. Procédé de préparation d'un mélange maître biodégradable conforme à la revendication 1,
dans lequel le monomère biodégradable est l'acide lactique, l'acide succinique, l'acide adipique, l'acide téréphtalique, le butanediol, le glycérol, le pentaérythritol, le lactide, le glycolide, la caprolactone ou une combinaison de ces composés.

3. Procédé de préparation d'un mélange maître biodégradable conforme à la revendication 1,
dans lequel le catalyseur renferme des métaux du groupe I-V de la classification périodique des éléments, un sel métallique, un hydroxyde, un chlorure, un oxyde ou une combinaison de ces éléments.

4. Procédé de préparation d'un mélange maître biodégradable conforme à la revendication 1, dans lequel le catalyseur est l'un des métaux suivants : zinc, étain, aluminium, magnésium, antimoine, titane, zirconium ou une combinaison de ces métaux ou un sel, hydroxide, chlorure, ou oxyde de ces métaux.

5. Procédé de préparation d'un mélange maître biodégradable conforme à la revendication 1,
dans lequel le catalyseur est de l'oxyde de zinc, du lactate de zinc, du stéarate de zinc, du chlorure stanneux, de l'octoate stanneux, du tétra-bulyl étain, de l'oxyde d'aluminium, du butoxyde de titane, du titanate de butyle, du titane d'isopropyle, du tétraisopropoxyde de titane, de l'oxyde d'antimoine, de l'oxyde ferrique, de l'acétylacetanate ferrique ou une combinaison de ces composés.

6. Procédé de préparation d'un mélange maître biodégradable conforme à la revendication 1,
dans lequel l'activateur de réaction est un activateur à groupe expoxy, un activateur à groupe anhydride, un activateur à groupe isocyanate, un activateur à groupe oxazoline, ou un activateur de réaction renfermant une double liaison insaturée susceptible de réagir avec les groupes carbonyl et hydroxyl.

7. Procédé de préparation d'un mélange maître biodégradable conforme à la revendication 6,
dans lequel l'activateur à groupe epoxy renferme un activateur à groupe epoxy du type acrylate renfermant un groupe epoxy, un activateur à groupe expoxy du type glycidyl métacrylate, ou un activateur à groupe epoxy renfermant de l'huile de soja expoxydée.

8. Procédé de préparation d'un mélange maître biodégradable conforme à la revendication 6,
dans lequel l'activateur à groupe epoxy est un activateur à groupe epoxy d'un oligomère ou prépolymère renfermant au moins trois groupes epoxy et ayant un poids moléculaire inférieur à 5000.

9. Procédé de préparation d'un mélange maître biodégradable conforme à la revendication 1, dans lequel l'agent de stabilisation thermique est un antioxydant complexe phosphaté, un antioxydant complexe à groupe phenol masqué ou un antioxydant complexe mixte de ces deux composants renfermant du triaryl phosphite, du trialkyl phosphite, du trialkyl aryl phosphate ester, de l'alkyl aryl phosphate ester, du trithio alkyl ester, du bis-phosphite et du phosphite polymère, du pentaerythrithol ester et des mélanges de ces composés.

10. Procédé de préparation d'un mélange-maître biodégradable conforme à la revendication 1, dans lequel l'agent retardateur de flamme est un agent retardateur de flamme d'addition renfermant l'un des composés suivants : borate de zinc, fluoroborate de zinc, hydroxyde d'aluminium, hydroxyde de magnésium, stéarate de magnésium, trioxyde d'antimoine, phosphore rouge, phosphaste ester, polyphosphate d'ammonium, polyphosphate d'ammonium, agent retardateur de flamme phosphore-azote, composés à base de siticium, nitrate de cuivre, nitrate d'argent, graphite expansible, montmorillonite, hydroxyde à double couche, mélamine, dicyandiamide, sels de guanidine et leurs dérivés, composés à étain-molybdène, dioxyde de silicium, et/ou
- la charge est une charge à base de silicate, à base de silice, à base d'oxyde ou à base de poudre métallique renfermant du carbonate de calcium, du sulfate de calcium, de la montmorillonite, de la poudre de talc, de l'amidon, du chitosane, de la chitine, des billes de verre, de l'amiante, du mica, de la silice, de la poudre de bois, de la poudre de coquilles, de l'attapulgite, de l'argile, du noir de carbone, de l'argile de poterie de la cellulose ou de la poudre de métal, et/ou
- l'agent antistatique est un sel d'ammonium quaternaire cationique, un sel d'amine, de l'alkyl imidazoline, un phosphate anionique, un sulfonate, un polyol non ionique, un polyol ester, un ester d'acide gras, un produit d'addition d'oxyde d'éthylène sur de l'alkyl amine, un sel d'ammonium quaternaire amphotère, un sel d'alanine, du noir de carbone ou une poudre métallique, et/ou
- le pigment est du dioxyde de titane, du noir de carbone, du lithopone, du jaune de chrome, du bleu de fer, du jaune d'oxyde de fer, de la poudre d'argent, de la poudre de laiton, du pigment écarlate, du jaune aza, du bleu de phthalocyanine, de la quinacridone, du cinnabre, de l'argile rouge, du réalgar, du vert de malachite, du carbonate de calcium, de la wollastonite, de la poudre de baryte, de la poudre de talc, de la poudre de mica ou du kaolin, et/ou
- l'agent moussant est un composé azo, un composé N-nitroso, un composé de sulfonyl hydrazide, un composé carbamido, un carbonate, un nitrite ou un agent moussant physique, et/ou
- l'agent de couplage de surface étant un agent de couplage à base de silane, à base de titanate, à base d'aluminate, à base de bimétal, à base de phosphate, ou à base de borate, un complexe de chrome, un agent de couplage à base de zirconium, un agent de couplage à base de terres rares ou un mélange de tels agents de couplage.

11. Mélange maître biodégradable obtenu par la mise en oeuvre du procédé conforme à la revendication 1.
